# EUROPÄISCHE PATENTANMELDUNG

(11) **EP 3 819 073 A1**
(43) Veröffentlichungstag der Anmeldung: **12.05.2021**
(21) Anmeldenummer: 19208410.1
(22) Anmeldetag: 11.11.2019
(51) Int. Cl.: B23Q 1/70, B23Q 11/08

(54) **WERKZEUGMASCHINE**

(71) Anmelder: Ivoclar Vivadent AG, 9494 Schaan (LI)
(72) Erfinder: HABIT, Andreas, 6774 Tschagguns (AT)
(74) Vertreter: Baronetzky, Klaus

(57) **Zusammenfassung**

Bei einer Werkzeugmaschine, mit einer, Werkzeugspindel (12) mit einer Spannzange (26) und einem Spindelmotor, bei der die Spannzange (26) für die Aufnahme und für die Freigabe eines Werkzeugs betätigbar ist, ist ein Sperrluftkanal (40), der mindestens teilweise radial außerhalb der Spannzange (26) verläuft, vorgesehen. Der Sperrluftkanal (40) endet in oder an einer Schutzkappe (34).

## Beschreibung

Die Erfindung betrifft eine Werkzeugmaschine, gemäß dem Oberbegriff von Anspruch 1 bzw. 12, insbesondere eine Werkzeugmaschine mit Spindelmotor und sich von diesem nach oben oder zur Seite hin erstreckender Werkzeugspindel.

Werkzeugmaschinen sind in zahlreichen Ausprägungen bekannt geworden. Für bestimmte Anwendungen eignen sich besonders Maschinen vom Typ 5/0, also solche, bei denen 0 Bewegungsachsen des Werkzeugs mit 5 Bewegungssachen des Werkstücks kombiniert werden.

Die Bewegungsachsen des Werkstücks werden typischerweise über einen Roboterarm bereitgestellt und stellen sich als 3 translatorische und 2 rotatorische Bewegungsachsen dar. Demgegenüber verbleibt das sich drehende Werkzeug stationär an einer Werkzeugspindel, die von einem Spindelmotor angetrieben wird und ortsfest realisiert ist.

Bei der Bearbeitung des Werkstücks durch das Werkzeug entstehen Späne, die je nach verwendeter Materialkombination von Werkstück und Werkzeug unterschiedlich ausfallen.

Wenn beispielsweise keramische Dentalrestaurationen gefräst werden, entstehen neben körnigen auch nahezu staubförmige Ablagerungen.

Während die körnigen Ablagerungen aufgrund ihres Eigengewichtes nach unten sinken, liegen die staubförmigen Ablagerungen zunächst in Form einer Art Nebel vor, der nur langsam absinkt, aber bei Stillstand des Spindelmotors nach Abschluss des Bearbeitungsvorgangs eine Staubschicht am Boden der Fräsmaschine oder z.B. einer Drehschleifmaschine bildet.

Wenn die Werkzeugmaschine eine sich vom Spindelmotor aus nach oben erstreckende Spindel aufweist, der Spindelmotor also aufrecht stehend angeordnet ist, lagern sich die Ablagerungen auch dort, also auch am Übergang zwischen Spindel und Spindelgehäuse ab.

Aber auch bei einer sich horizontal erstreckenden Spindel geraten Ablagerungen durch die im Betrieb erzeugten Verwirbelungen in den Übergangsbereich zwischen Spindel und Spindelgehäuse.

Um die Verschmutzung des Fräsraums zu reduzieren, ist es bekannt geworden, über Luftdüsen, die besonders bevorzugt am oberen Rand des Werkraums angebracht sind, den Fräsraum zu reinigen.

Diesen diametral gegenüber liegt dann typischerweise eine Absaugöffnung, die für die Abfuhr der Ablagerungen sorgen soll.

Eine derartige Lösung ist beispielsweise aus der EP 3 012 065 A1 bekannt.

Daneben ist es bekannt geworden, den Bearbeitungsbereich, also den Bereich, an dem das Werkzeug am Werkstück anliegt, besonders zu reinigen. Hierzu ist es gemäß der EP 3 338 945 A1 bekannt geworden, Düsen an der Werkzeugspindel anzuordnen, durch die sowohl Wasser als auch Druckluft wahlweise dem Bearbeitungsbereich zuführbar ist, um diesen wichtigen Bereich nach Möglichkeit frei von Ablagerungen zu halten.

Drehschleifmaschinen, die hier beiispielhaft erwähnt seien, weisen typischerweise ein vergleichsweise geringes erforderliches Drehmoment, aber für den entsprechenden erwünschten Bearbeitungsfortschritt eine hohe Umdrehungsgeschwindigkeit des Spindelmotors auf. Diese beträgt typischerweise 40.000 U/min, kann aber auch bis zu 80.000 U/m betragen.

Bei einer derart hohen Drehgeschwindigkeit ist es unabdingbar, dass die Lagerung hoch präzise realisiert ist. Es werden Kugellager mit einem Lagerspiel von etwa 500 nm verwendet, die auch bei derart hohen Geschwindigkeiten die erforderlichen Stützkräfte auffangen können.

Für die Abstützung der Spindel sind dann typischerweise 2 bis 4 Kugellager übereinander vorgesehen.

Bereits ein Staubkorn würde jedoch, wenn es in die Kugellaufbahn gerät, bei dieser hohen Geschwindigkeit verschleißend wirken.

Daher wird der Bereich der Lager von Lagerluft in einem Lagerluftkanal durchströmt. Die Lagerluft wird durch hintereinander geschaltete Filter, also zunächst ein Grobfilter, dann ein Feinfilter, gereinigt und bildet im Grunde einen Zylinderspalt um die Werkzeugspindel.

Dieser Spalt endet etwas oberhalb des obersten Kugellagers. Wenn die Drehschleifmaschine abgeschaltet wird, aber auch im Betrieb durch Verwirbelungen, lassen sich dort gegebenenfalls staubförmige Ablagerungen nieder.

Vor dem Einschalten des Spindelmotors wird jedoch die Lagerluft eingeschaltet, so dass die Ablagerungen dort ausgestoßen werden sollen. Die Ablagerungen sind aber manchmal klebrig, so dass das Ausstossen nicht immer gelingt.

Bei derart hohen Drehgeschwindigkeiten ist es ferner wichtig, dass das Werkzeug in der typischerweise verwendeten Spannzange konzentrisch, also frei von Abweichungen, gehalten wird. Hierzu sind selbstzentrierende Spannbacken bevorzugt, die an Schrägflächen gleiten und das Werkzeug durch einen axialen Federdruck einspannen. Für den Werkzeugwechsel wird über eine rückwärtige Druckplatte dafür gesorgt, das die Spannbacken nach vorne bewegt werden, so dass sie an den Schrägflächen radial nach außen geführt werden und das Werkzeug freigeben.

Die Druckluft für das Lösen der Spannzange liegt mit einem Druck zwischen 6 und 8 bar vor, wesentlich mehr also, als die Lagerluft, die beispielsweise einem Druck von 2 bar benötigt.

Um auch den Bereich der Spannbacken und damit der Spannzange frei von Ablagerungen zu halten, ist es vorgeschlagen geworden, einen kurzen Luftimpuls durch die Spannzange hindurch zuleiten, der dann für die Reinigung der dortigen Ablagerungen sorgen soll, wenn das Werkzeug gewechselt wird, damit das nächstfolgende Werkzeug sich wiederum automatisch zentrieren lässt.

Gerade bei länger stehenden Werkzeugmaschinen können jedoch die Ablagerungen auch festbacken, so dass sie sich durch den Druckluftimpuls nicht oder nicht vollständig lösen lassen.

Dies führt zu einer leichten Exzentrizität und damit einem erhöhten Werkzeugverschleiß bzw. einer weniger genauen Herstellung des Werkstücks.

Ein entsprechendes Werkstück kann beispielsweise ein keramisches Dentalrestaurationsteil sein, bei dem es bekanntlich auf eine besonders gute Genauigkeit ankommt.

Demgegenüber liegt der Erfindung die Aufgabe zu Grunde, eine Werkzeugmaschine gemäß dem Oberbegriff von Anspruch 1 bzw. 12 zu schaffen, die insbesondere für die Herstellung von Dentalrestaurationsteilen geeignet ist und auch langfristig gute Genauigkeitsergebnisse erzielt.

Diese Aufgabe wird erfindungsgemäß durch Anspruch 1 bzw. 12 gelöst. Vorteilhafte Weiterbildungen ergeben sich aus den Unteransprüchen.

Erfindungsgemäß ist es vorgesehen, die Sperrluft so zu setzen, dass sie auch den Zutritt von Ablagerungen zur Spannzange blockiert.

Hierzu ist erfindungsgemäß eine Schutzkappe vorgesehen, die zum einen den Bereich zwischen Werkzeug und Spindelgehäuse abdeckt und abschirmt. Die Schutzkappe ermöglicht zudem, dass der Sperrluftkanal verlängert wird und in der Folge an ihr endet.

Hierdurch wird das Ende des Sperrluftkanals Richtung Werkzeug verlagert.

Zwar ist durch einen bevorzugt vorgesehenen Ringspalt an der Schutzkappe, an dem der Sperrluftkanal endet, der Strömungswiderstand im Luftkanal etwas vergrößert, und dementsprechend bei gleicher Pumpleistung und gleichem Überdruck die Strömungsgeschwindigkeit im Luftkanal etwas reduziert. Der Ringspalt erstreckt sich bevorzugt zwischen dem Werkzeug und der Spannzange einerseits und der Schutzkappe andererseits. Unter Rinspalt sei hier jede beliebige mindestens teilringförmige Ausgestaltung eines Spalts zu verstehen

Überraschend führt dies jedoch keineswegs zu einer verschlechterten Reinigungswirkung und einer höheren Störanfälligkeit, sondern ganz im Gegenteil zu einer verbesserten Betriebssicherheit.

Durch die erfindungsgemäße Schutzkappe bleiben die Spannbacken der Spindel frei von Ablagerungen. Dort entsteht keine Unwucht, was in Hinblick auf die hohen Motordrehzahlen von z.B. 60.000 U/min wichtig ist.

Derart hochtourige Werkzeugmaschinen weisen häufig zur Kompensationen von Unrundheiten eine sogenannte Schleuderscheibe auf. Diese hat an ihrem Außenumfang sogenannte Wuchtbohrungen. Die Wuchtbohrungen reduzieren durch Entfernung von Material an der entsprechenden Winkelposition die Unwucht, oder kompensieren sie sogar vollständig.

Die Schleuderscheibe ist angrenzend an das Spindelgehäuse auf der Spindel fest montiert. Zwar dreht sie sich daher ebenfalls mit einer hoher Drehzahl, mit entsprechender Fliehkraft an ihrem Außenumfang. Dennoch setzen sich die Wuchtbohrungen mit dem entstehenden, feinstaubartigen Abrieb leicht zu.

Erfindungsgemäß ist der Sperrluftkanal an der Spindel von der Schutzkappe abgedeckt. Diese deckt bevorzugt die Spannbacken der Spannzange ab. Wenn eine Schleuderscheibe vorgesehen ist, wird diese ebenfalls mit abgedeckt.

Der Sperrluftkanal verläuft erfindungsgemäß auch durch die Schutzkappe. Er endet am werkzeugnahen Ende der Schutzkappe, bevorzugt an einem Ringspalt, der sich zwischen der Schutzkappe und einem sich drehenden Teil der Werkzeugmaschine erstreckt.

Damit ist der gesamte vordere Bereich der Spindel, einschließlich der Werkzeugaufnahme und des Schaftes des Werkzeugs, vor Verschmutzungen geschützt und abgedeckt. In vorteilhafter Ausgestaltung der Erfindung wird durch die Schutzkappe oberhalb der Spannzange, also zwischen Spindel und Werkzeug, ein Überdruckraum geschaffen.

Diese wird von Sperrluft gespeist und endet in einem oberhalb befindlichen Ringspalt, wo die Sperrluft ausbläst und damit verhindert, das Ablagerungen in die Spannzange und in weitere Bereiche der Werkzeugmaschine eintreten können.

Besonders günstig ist es, dass die Sperrluft für die Spannzange mit der Sperrluft für die Wälzlager kombiniert werden kann. Hierzu durchtritt die Sperrluft bevorzugt zunächst den Lagerluftkanal der Wälzlager, und hieran anschließend wird sie weiter nach oben geführt, so dass der Sperrluftkanal sich bis oberhalb des oberen Endes der Spannzange, oder ggf. bis unterhalb dieser, erstreckt.

In vorteilhafter Ausgestaltung ist es vorgesehen, dass die Schutzkappe aus einem gegenüber Metall weicherem und elastischeren Material besteht, insbesondere aus Kunststoff und besonders bevorzugt aus PP, PE, PA, ABS und/oder GFK. Die Schutzkappe kann als Spritzgussteil preisgünstig hergestellt werden.

In vorteilhaften Ausgestaltung ist es vorgesehen, dass die Schutzkappe fest auf dem Spindelhäuse montiert ist. Die Montage kann in beliebiger geeigneter Weise erfolgen.

Die Schutzkappe ist bevorzugt abnehmbar. Sie kann aufgesteckt sein, z.B. indem per Anlage an dem Spindelgehäuse eine definierte Postion vorgegeben wird. Es ist auch möglich, dass die Schutzkappe oder ein sonstiges feststehendes Teil mit einer Rastvorrichtung versehen ist, die die Schutzkappe zentriert, mit einem Steg , der radial einwärts vorspringt und an der Schutzkappe ausgebildet ist, und einer hierzu passenden Nut an dem Gehäuse oder dem sonstigen feststehenden Teil.

In einer modifizierten Ausgestaltung ist die Schutzkappe hingegen nicht abnehmbar, sondern fest verbunden oder sogar einstückig mit der Werkzeugmaschine im übrigen.

Bei dieser Ausführungsform ragt die Spindel, die für das Einspannen des Werkzeugs bestimmt ist, aus dem Spindelgehäuse und das Spindelgehäuse bildet an seinem vorderen Ende eine Schutzkappe zur Spindel hin aus. Die Schutzkappe weist an Ihrem vorderen Ende einen gegenüber Ihrem anderen, rückwärtigen Ende geringeren Durchmesser auf und bildet am vorderen Ende den Ringspalt gegenüber einem sich drehenden Teil der Werkzeugmaschine oder dem Werkzeug aus. An dem Ringspalt endet der mit Luft gespeiste Überdruckraum. Dieser erstreckt sich am Ende eines Sperrluftkanals.

Bevorzugt ist der Ringspalt und die Schutzkappe an einer Stelle realisiert, an der das Einspannen und Entnehmen des Werkzeug nicht behindert wird.

Die Spindel weist bevorzugt eine automatisch betätigbare, mit Druckluft gespeiste Spannzange auf.

In vorteilhafter Ausgestaltung ist es vorgesehen, dass die Schutzkappe eine Schleuderscheibe mit Wuchtbohrungen abdeckt, oder zumindest möglichst viele der drehenden Teile der Spindel.

In vorteilhafter Ausgestaltung ist es vorgesehen, dass der Sperrluftkanal stromauf der Schutzkappe als Lagerluftkanal ausgebildet ist.

In vorteilhafter Ausgestaltung ist es vorgesehen, dass die Spannzange einen Druckluftantrieb aufweist, der zum Öffnen der Spannbacken von hinten über eine Druckplatte auf diese wirkt, und insbesondere dass der Druckluftantrieb über ein Druckminderventil den Sperrluftkanal speist, oder dass zwei unabhängige Druckluftanschlüsse vorgesehen sind, oder einen Elektroantrieb aufweist.

In weiterer vorteilhafter Ausgestaltung ist es vorgesehen, dass bei geöffneter Spannzange ein Luftimpuls von insbesondere mehr als 6 bar an der Spannzange und dem Werkzeug entlang abgebbar ist, unter Reinigung der Spannzange von Spänen.

In vorteilhafter Ausgestaltung ist es vorgesehen, dass der Ringspalt und die Schutzkappe eine zur Werkzeugachse koaxiale Ausrichtung oder eine Ausrichtung haben, die höchstens um +/- 10° von der Achse der Werkzeugspindel abweicht.

In vorteilhafter Ausgestaltung ist es vorgesehen, dass eine Mehrzahl von Düsen um das Werkzeug verteilt an der Werkzeugspindel oder der Werkzeugmaschine angebracht sind, die mindestens teilweise auf einen Bearbeitungsbereich zwischen Werkzeug und Werkstück gerichtet sind und insbesondere in einer Düsenplatte vorgesehen sind, die sich kreisringförmig erstreckt.

Bevorzugt ist dabei die Ausgestaltung so gewählt, dass der Ringspalt - in axialer Richtung betrachtet - zwischen der Werkzeugspindel im übrigen und dem Werkzeug an der Schutzkappe radial innen an dieser gebildet ist und einen vergleichsweise hohen Strömungswiderstand hat und dementsprechend den Überdruckraum schafft.

Dieser Ringspalt kann mit einer axial gerichteten Austrittsfläche des Ringspalts realisiert sein, mit einer schräg zur Werkzeugachse gerichteten oder mit einer radialen oder leicht schräg nach vorwärts gewandten Austrittsfläche.

Die Realisierung einer radialen Austrittsfläche ist besonders dann leicht möglich, wenn das Werkzeug mit einem Werkzeugring versehen ist. Ein solcher Werkzeugrringist typischerweise bei modernen Werkzeugen für Werkzeugmaschinen ohnehin vorgesehen und dient dazu, das Werkzeug für den Werkzeugwechsel leicht an einer Greifgabel handhaben zu können. Alternativ ist es vorgesehen, das Werkzeug in einer zum Ring passenden Aufnahme abzulegen bzw. aufzunehmen.

Es versteht sich, dass die erfindungsgemäßen Wirkungen besonders günstig bei einer Werkzeugmaschine mit senkrecht stehender Werkzeugspindel zur Geltung kommen. Grundsätzlich ist die Realisierung der Zusatz-Sperrluft für die Werkzeugspindel auch dann günstig, wenn eine liegende Werkzeugspindel zum Einsatz gelangt, da aufgrund der Verwirbelungen durch die Bewegung und die Luftströmungen im Fräsraum auch dann die Gefahr besteht, das die Spannzange durch Ablagerung verunreinigt wird.

Die Erfindung wird hier anhand einer Werkzeugmaschine mit einer nach oben weisenden Spindel beschrieben. Bei einer solchen Werkzeugmaschine ist das Spindelgehäuse typischerweise ortsfest, insbesondere am Boden des Fräsraums angeordnet, und es besteht ein Roboterarm, der das Werkstück trägt und führt, bevorzugt in 4 oder 5 Raumachsen.

Unter senkrecht stehender Werkzeugspindel ist hier eine solche Anordnung zu verstehen, bei der das Werkzeug sich oben befindet, und in die Spannzange von oben nach unten eingeführt wird, um dort eingespannt zu werden.

Es versteht sich, dass anstelle dessen auch eine Werkzeugmaschine erfindungsgemäß realisierbar ist, bei der eine andere Anordnung der Werkzeugspindel vorgesehen ist, z.B. eine liegende oder eine im Raum bewegliche.

Erfindungsgemäß ist das Gehäuse der Werkzeugspindel mit der Schutzkappe und insbesondere unter Schaffung des Überdruckraums im Vergleich zum Stand der Technik weiter nach oben gezogen. Der Sperrluftspalt endet also nicht an dem oder knapp oberhalb des Endes der Gehäuses der Werkzeugmaschine, sondern wenige cm oder etwa 2 cm oberhalb dieses Endes unter Bildung des Ringspalts.

Der Überdruckraum erstreckt sich bevorzugt zwischen dem Sperrluftkanal und den erfindungsgemäß angeordneten Ringspalt an der Schutzkappe.

Das Gehäuse der Werkzeugspindel ist typischerweise nach oben hin konisch zulaufend. Hieran schließt sich harmonisch die Schutzkappe an, die ein schlankes Profil mit einer S-förmigen Kontur haben kann.

Dennoch verbleibt ausreichend Platz, um eine Düsenplatte für Luftdüsen bereitzustellen, die sich radial außerhalb der Schutzkappe auf einer Fläche erstrecken, deren Normale achsparallel ist. Die an sich bekannten Luftdüsen enden dann weiter oben.

Dies hat den zusätzlichen Vorteil, dass der Austritt des Strömungsmediums, also Luft oder Wasser, durch diese Reinigungsdüsen näher an den Bearbeitungsbereich herangerückt ist, so dass eine bessere und gezieltere Reinigung dort möglich ist. Weitere Vorteile, Einzelheiten und Merkmale ergeben sich aus der nachfolgenden Beschreibung zweier Ausführungsbeispiele der Erfindung anhand der Zeichnung.

Es zeigen :
- Fig. 1: ein Teil einer erfindungsgemäßen Werkzeugmaschine, unter Darstellung eines Teils der Werkzeugspindel und des Werkzeugs
- Fig. 2: ein Schnitt durch einen Teil einer erfindungsgemäßen Werkzeugmaschine, unter Darstellung der Werkzeugspindel in ihrem oberen Teil, einschließlich des Werkzeugs, in gegenüber Fig. 1 vergrößerter Darstellung; und
- Fig. 3: eine erfindungsgemäße Schutzkappe in einer modifizierten Ausführungsform.

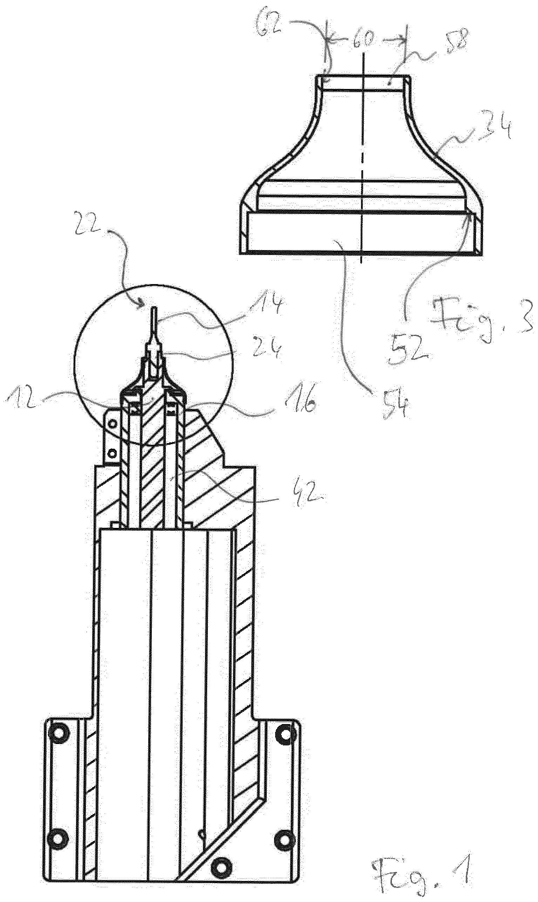

Fig. 1 ist eine erfindungsgemäße Werkzeugmaschine 10 auszugsweise dargestellt. Die Werkzeugmaschine 10 weist eine Werkzeugspindel 12 auf, die ein Werkzeug 14 trägt und eingespannt hält.

Die Werkzeugspindel 12 weist ein Spindelgehäuse 16 auf. Im Bearbeitungsbereich 22 hat das Werkzeug 14 Kontakt mit einem nicht dargestellten Werkstücks, so dass dort Späne entstehen.

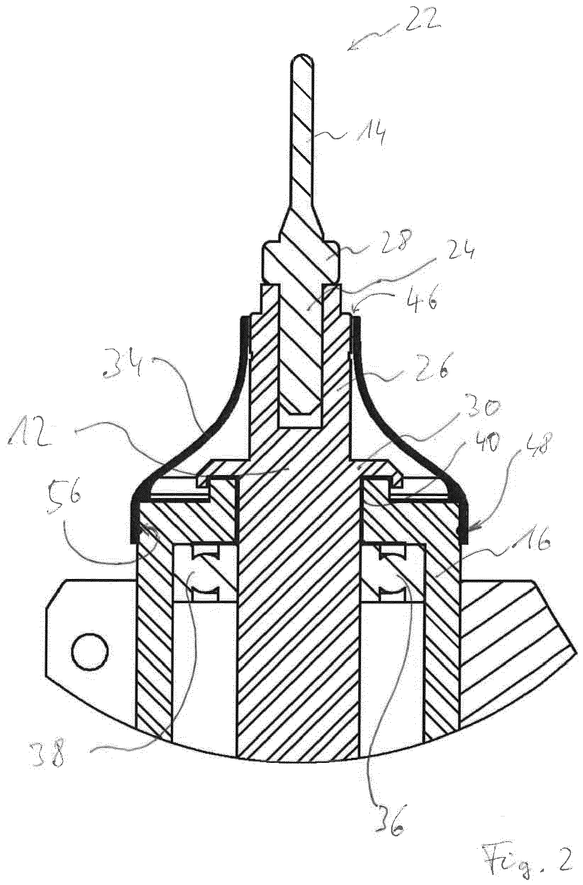

Das Werkzeug 14 hat einen Schaft 24, der in einer in Fig. 2 dargestellten Spannzange 26,eingespannt gehalten ist.

Im dargestellten Ausführungsbeispiel weist das Werkzeug 14 einen Werkzeugring 28 mit drei nicht dargestellten Ringstegen auf, zwischen denen sich Ringnuten erstrecken. Die Ringnuten dienen der Aufnahme des Werkzeugs 14 in einer Greifgabel eines nicht dargestellten Roboterarmes und damit dem Werkzeugwechsel.

Das Werkzeug 14 weist den ringförmigen Werkzeugring 28 auf, die den Schaft 24 nach oben abgrenzt. Der Werkzeugring 28 dient zugleich als Anschlag für das Einführen des Werkzeugs 14 in die Spannzange 26.

Während hier unter Bezugnahme auf die Zeichnung das Bezugszeichen 12 mit Spindel bezeichnet ist, versteht es sich, dass auch ein sich drehender Teil der Spindel oder der Rotor darunter verstanden werden kann. Die Spannzange 26 ist in ihrer tatsächlichen Form nicht dargestellt, sondern nur schematisch angedeutet.

Ablagerungen werden durch gehäuseseitig zusätzlich vorgesehene Luftdüsen beim Betrieb der Werkzeugmaschine 10 aufgewirbelt. Diese werden über eine bodenseitige Absaugung mindestens teilweise entfernt.

Wenn die Werkzeugmaschine 10 jedoch abgeschaltet wird, wird auch die Versorgung der Luftdüsen,abgeschaltet, und damit können sich das entstehende Fräsmehl und die zugehörigen Späne ablagern.

Die Ablagerung erfolgt unter anderem auch auf der Werkzeugspindel 12, und bislang konnten auch Ablagerungen ins Innere der Werkzeugspindel 12 gelangen.

Nachdem die Werkzeugmaschine 10 mit mehr als 30.000 U/min arbeitet, ist die Realisierung eines Dichtrings nicht möglich, denn ein solcher würde bei Drehzahlen oberhalb von 5000 U/min umgehend verschleißen.

Die Werkzeugmaschine 10 weist - wie es auch aus Fig. 2 ersichtlich ist - eine Schleuderscheibe 30 auf. Diese ist an der Spindel 12 fest angebracht.

Die Schleuderscheibe 30 ist an ihrem Außenumfang der Teil der Spindel 12 mit dem größtem Radius. Sie weist ferner in ihrem äußeren Bereichen Unwuchtbohrungen auf. Diese werden angebracht, um eine etwaige Unwucht der Spindel 12 zu kompensieren.

Die Schleuderscheibe 30 deckt einen Sperrluftkanal 40 ab, der sich zwischen dem Spindelgehäuse 16 und der Spindel 12 erstreckt.

Der Sperrluftkanal 40 bildet das Ende eines Lagerluftkanals 42, in dem Wälzlager 36 und 38 angeordnet sind, die von der Lagerluft durchströmt werden.

Nachdem der Sperrluftkanal 40 wesentlich schmaler als der Lagerluftkanal 42 ist, ist die Strömungsgeschwindigkeit dort höher. Dennoch konnten bislang Ablagerungen dorthin gelangen und gegebenenfalls die Lager 36 und 38 beeinträchtigen.

Ferner konnten bislang Ablagerungen in dem Bereich der Schleuderscheibe 30 gelangen und die Unwuchtbohrungen zusetzen. Hierdurch wurde die Auswuchtung der Spindel 12 beeinträchtigt, was zu Lagerschäden führen konnte.

Erfindungsgemäß ist eine Schutzkappe 34 vorgesehen, die auf das obere Ende des Spindelgehäuses 16 aufgestülpt ist.

Die Schutzkappe 34 deckt das obere Ende des Spindelgehäuses 16 ab und damit insbesondere auch den Bereich der Schleuderscheibe 30. Sie erstreckt sich entlang des vorderen Bereichs der Spindel 12 und schmiegt sich dort an deren Außenkontur an.

Die Schutzkappe 34 ist auf dem Spindelgehäuse 16 gelagert und damit drehfest. Nachdem sie die Schleuderscheibe 30 abdeckt, wird sie von der Luft aus dem Sperrluftkanal 40 gespeist und gefüllt. Es entsteht innerhalb der Schutzkappe 34 ein Überdruckraum 44.

Dieser erstreckt sich bis zu einem Ringspalt 46, an dem die Schutzkappe 34 radial knapp außerhalb der Spindel 12 endet. Der Ringspalt 46 weist eine Breite von 0,4 mm auf, wobei das Spaltmaß sich in weiten Bereichen an die Erfordernisse anpassen lässt und beispielsweise zwischen 0,05 mm und 1,5 mm betragen kann.

In dem Lagerluftkanal 42 besteht ein Überdruck zwischen 2 und 3 bar, wobei der Überdruck auch zwischen 0,5 und 6 bar liegen kann.

Die durchströmende Luft kann sich auf erwa 15 Liter pro min belaufen, wobei das Strömungsvolumen auch zwischen 5 und 50 Litern pro min liegen kann.

Im Überdruckraum 44 besteht ein etwas geringerer Überdruck von beispielsweise 0,5 bar.

Der Ringspalt 46 wird an seiner einen Spaltseite von der Spannzange 26 der Spindel 12 gebildet, und an seiner anderen Spaltseite von der Schutzkappe 34.

Die Schutzkappe 34 weist eine, im Schnitt und einseitig des Radius betrachtet, im wesentlichen S-förmige Kontur auf. Sie ist per Presssitz auf das Spindelgehäuse 16 aufgesteckt.

Das Spindelgehäuse 16 weist dort eine umlaufende Ringnut 48 auf, in die ein radial einwärts vorspringender Steg 56 der Schutzkappe 34 eindringt. Hierdurch ist die Schutzkappe 34 sicher zentriert.

In erfindungsgemäß besonders bevorzugter Weise lässt sich die Luftversorgung in dem Lagerluftkanal 42 intermittierend betreiben. Ein Luftimpuls kann die Reinigung der Spannzange 26 wesentlich verbessern.

Aus Fig. 3 ist die Schutzkappe 34 in einer modifizierten Ausgestaltung ersichtlich. Anstelle des Stegs 50 gemäß Fig. 2 ist dort eine Auflagefläche 52 vorgesehen, die auf dem radial äußerem Bereich des Spindelgehäuses 16 aufliegt und ebenfalls der Zentrierung dient.

Es ist ersichtlich, dass sich die Schutzkappe 34 sowohl an die Außenkontur des Spindelgehäuses 16 als auch der Werkzeugspindel 12 anschmiegen kann, was durch die S-Form wie vorstehend erwähnt begünstigt wird.

Die Schutzkappe 34 ist für eine Werkzeugmaschine mit einer Spindel, einem Spindelgehäuse und einem Werkzeug bestimmt. An ihrem rückwärtigen Ende 54 hat sie eine Form, die sie für die Lagerung auf einem feststehenden Teil der Werkzeugmaschne, wie dem Spindelgehäuse 16, geeignet macht. An Ihrem vorderen, also werkzeugnahen, Ende 58 hat sie einen gegenüber Ihrem anderen, rückwärtigen Ende geringeren Durchmesser und eine schlanke, sich dem endseitigen Innendurchmesser 60 annähernde Form.

Die Schutzkappe 34 weist in auf das Spindelgehäuse 16 aufgesetztem Zustand eine ringförmige Düsenflanke 62 auf, welche, zusammen mit einen sich drehenden Teil der Werkzeugmaschine, insbesondere dem Werkzeug 14 oder der Spindel 12, als zweite ringförmige Düsenflanke, eine Düse in Form des Ringspalts 46 ausbildet.

Die Schutzkappe 34 deckt, in auf der Werkzeugmaschine 10 gelagertem Zustand, den Sperrluftkanal 40 der Werkzeugmaschine 10, insbesondere zum Werkzeug 14 hin, ab und verlagert insofern das Ende des Sperrluftkanals 40 nach vorne, also zum Werkzeug 14 hin.

Der Sitz der Schutzkappe 34 ist als Presssitz ausgebildet, über welchen die Schutzkappe 34 auf einem feststehenden Teil der Werkzeugmaschine 10 in Presspassung und zentriert montierbar ist. Die Schutzkappe 34 ist dort an ihren Sitz so ausgebildet, dass sie als Ersatzteil oder als Zubehörteil für bestehende Werkzeugmaschinen 10 fungiert und auf deren feststehende Teile passt.

## Patentansprüche

1. Werkzeugmaschine, mit einerWerkzeugspindel (12) mit einer Spannzange (26) und einem Spindelmotor, wobei die Spannzange (26) für die Aufnahme und für die Freigabe eines Werkzeugs betätigbar ist, und mit einem Sperrluftkanal (40), der mindestens teilweise radial außerhalb der Spannzange (26) verläuft, **dadurch gekennzeichnet, dass** der Sperrluftkanal (40) in oder an einer Schutzkappe (34) endet.

2. Werkzeugmaschine nach Anspruch 1, **dadurch gekennzeichnet, dass** zwischen der Schutzkappe (34) und dem Werkzeug (14) oder der Spannzange (26) oder einen drehenden Teil einer Werkzeugmaschine (10) ein Ringspalt (46) vorgesehen ist, dessen eine Spaltseite von dem Werkzeug (14) oder der Spannzange (26) oder einem sonstigen drehenden Teil der Werkzeugmaschine (10) gebildet ist und dessen andere Spaltseite (Düsenflanke 62) von der Schutzkappe (34) gebildet ist.

3. Werkzeugmaschine nach einem der vorherigen Ansprüche, **dadurch gekennzeichnet, dass** die Schutzkappe (34) im Wesentlichen glockenförmig oder im Wesentlichen trapezförmig ausgebildet ist oder eine - im Schnitt und einseitig betrachtet - S-förmige oder trapezförmige Kontur aufweist.

4. Werkzeugmaschine nach einem der vorherigen Ansprüche, **dadurch gekennzeichnet, dass** die Schutzkappe (34) an dem Ringspalt (46) endet und auf ein Gehäuse (16) der Spindel (12) oder der Werkzeugmaschine (10), oder einem sonstigen feststehenden Teil, aufgesteckt, aufgeschraubt oder in sonstiger Weise befestigt ist.

5. Werkzeugmaschine nach einem der vorherigen Ansprüche, **dadurch gekennzeichnet, dass** das hintere Ende (58) der Schutzkappe (34) mit einem Teil der Werkzeugmaschine (10), insbesondere unter Bildung eines Pressitzes, per Formschluss, per Reibschluss oder per Drehen, fest verbunden ist, umlaufend abdichtend ist und/oder abnehmbar ist.

6. Werkzeugmaschine nach einem der vorherigen Ansprüche, **dadurch gekennzeichnet, dass** die Schutzkappe (34) in ihrem vorderen, an dem Ringspalt (46) angrenzenden Bereich, der sich über mindestens 20 %, bevorzugt mindestens 30 %, ihrer axialen Gesamtlänge erstreckt, gegenüber den drehenden Teilen der Werkzeugmaschine (10) eine radiale Erstreckung aufweist, die die der drehenden Teile um weniger als 30 %, bevorzugt weniger als 15 % übersteigt.

7. Werkzeugmaschine nach einem der vorherigen Ansprüche, **dadurch gekennzeichnet, dass** in der Schutzkappe (34) ein Überdruckraum (44) gebildet ist und der Strömungswiderstand der Luft durch den Überdruckraum (44) und die Schutzkappe (34) an dieser Stelle geringer ist als im Bereich des den Überdruckraum (44) abschließenden Ringspalts (46).

8. Werkzeugmaschine nach einem der vorherigen Ansprüche, **dadurch gekennzeichnet, dass** das Werkzeug (14) mindestens einen Werkzeugring (28) aufweist, der nach radial auswärts vorspringt, und dass der Sperrluftkanal (40) an dem Werkzeugring (28) oder maximal 1 cm unterhalb des Werkzeugringes (30) endet.

9. Werkzeugmaschine nach einem der vorherigen Ansprüche, **dadurch gekennzeichnet, dass** ein Lagerluftkanal (42) an Lagern (36,38) der Spindel (12) gebildet ist und mit einem Überdruck zwischen 0,5 bar und 6 bar, bevorzugt zwischen 1 und 3 bar, gespeist ist und ein Strömungsvolumen zwischen 5 Litern pro Minute und 80 Litern pro Minute, bevorzugt zwischen 20 bis 50 Litern pro Minute hat.

10. Werkzeugmaschine nach einem der vorherigen Ansprüche, **dadurch gekennzeichnet, dass** ein Lagerluftkanal (42) an Lagern (36,38) der Spindel (12) gebildet ist und den Sperrluftkanal (40) zwischen der Spindel (12) und dem Spindelgehäuse (16) speist.

11. Werkzeugmaschine nach einem der vorherigen Ansprüche, **dadurch gekennzeichnet, dass** ein Ringspalt (46) an der Schutzkappe (34) ein Spaltmaß zwischen 0,05 mm und 1,5 mm aufweist und bevorzugt zwischen 0,15 und 0,8 mm, und besonders bevorzugt zwischen 0,3 und 0,5 mm.

12. Werkzeugmaschine mit einer Spindel, die für das Einspannen eines Werkzeugs (14) bestimmt ist, und einem Spindelgehäuse (16), an dem die Spindel gelagert ist, welche Spindel an einem vorderen Ende des Spindelgehäuses (16) aus dem Spindelgehäuse (16) herausragt, **dadurch gekennzeichnet, dass** das Spindelgehäuse (16) an seinem vorderen Ende eine Schutzkappe (34) zur Spindel hin ausbildet, welche Schutzkappe (34) an Ihrem vorderen Ende (58), einen gegenüber Ihrem anderen, rückwärtigen Ende (54) geringeren Durchmesser aufweist und am vorderen Ende (58) einen Ringspalt (46) mit einem sich drehenden Teil der Werkzeugmaschine oder dem Werkzeug (14) ausbildet, an welchem Ringspalt (46) insbesondere ein mit Luft gespeister Überdruckraum endet.

13. Schutzkappe für eine Werkzeugmaschine mit einer Spindel, einem Spindelgehäuse (16) und einem Werkzeug (14), **dadurch gekennzeichnet, dass** die Schutzkappe (34) die auf einem feststehenden Teil der Werkzeugmaschine (10), wie dem Spindelgehäuse (16), gelagert oder befestigt, an Ihrem vorderen Ende (58), einen gegenüber Ihrem anderen, rückwärtigen Ende (54) geringeren Durchmesser aufweist und am Ende (58) eine sich dem endseitigen Innendurchmesser (60) am Ende (58) annähernde schlanke Form aufweist.

14. Schutzkappe nach Anspruch 13, **dadurch gekennzeichnet, dass** sie in auf das Spindelgehäuse (16) aufgesetztem Zustand eine ringförmige Düsenflanke (62) aufweist, welche, zusammen mit einen sich drehenden Teil der Werkzeugmaschine, als zweite ringförmige Düsenflanke, eine Düse in Form eines Ringspalts (46) ausbildet.

15. Schutzkappe nach Anspruch 13 oder 14, **dadurch gekennzeichnet, dass** die Schutzkappe (34) einen Sperrluftkanal (40) abdeckt und insofern das Ende des Sperrluftkanals (40) gleichsam nach vorne verlagert, also zum Werkzeug oder einem sonstigen sich drehenden Teil hin.

16. Schutzkappe nach Anspruch 13, 14 oder 15, **dadurch gekennzeichnet, dass** der Sitz der Schutzkappe (34), als Gewindesitz, als Stecksitz und/oder als als Presssitz ausgebildet ist, über welchen die Schutzkappe (34) auf einem feststehenden Teil der Werkzeugmaschine (10), insbesondere in Presspassung und, zentriert montierbar ist, und/oder dass die Schutzkappe (34) an ihren Sitz so ausgebildet ist, dass sie als Ersatzteil oder als Zubehörteil für bestehende Werkzeugmaschinen (10) fungiert und auf deren feststehende Teile passt.
